# EUROPÄISCHE PATENTSCHRIFT

(11) **EP 0 967 257 B1**
(45) Veröffentlichungstag und Bekanntmachung des Hinweises auf die Patenterteilung: **03.03.2004**
(21) Anmeldenummer: 99111874.6
(22) Anmeldetag: 21.06.1999
(51) Int. Cl.: C09D 11/16

(54) **Sterine enthaltende Tinte**
Sterols containing ink
Encre contenant des stérols

(30) Priorität: 22.06.1998 DE 19827710
(43) Veröffentlichungstag der Anmeldung: 29.12.1999
(73) Patentinhaber: Schwan-STABILO Schwanhäusser GmbH & Co. KG, 90562 Heroldsberg (DE)
(72) Erfinder:
(74) Vertreter: Leissler-Gerstl, Gabriele

(56) Entgegenhaltungen:
- WO-A-89/09247
- WO-A-98/13433

## Beschreibung

Die vorliegende Erfindung betrifft eine Tinte auf Basis organischer Lösungsmittel. Insbesondere betrifft die vorliegende Erfindung rasch trocknende, wisch- und wasserfeste, gut haftende Tinten, also sogenannte "permanente" Tinten. Diese erfindungsgemäßen Tinten auf Lösungsmittelbasis mit verbesserter Haftfestigkeit und Filmbildungseigenschaften, sowie verbesserten Eigenschaften des Schriftbildes eignen sich insbesondere zur Beschriftung glatter, nichtsaugender Untergründe, wie z.B. transparenter Folien für den OHP-Bereich.

Tinten die zur Markierung/Beschriftung glatter Oberflächen, und vorzugsweise transparenter Folien, verwendet werden, müssen eine Kombination bestimmter Eigenschaften erfüllen. Die Markierung/Beschriftung muß einigermaßen rasch auftrocknen, um ein unerwünschtes Verwischen der Schrift zu verhindern, sie muß wisch- und wasserfest sein und dauerhaft auf der zu beschriftenden Unterlage haften. Der Film muß glatt, elastisch und möglichst klar-durchsichtig sein. Sie muß sich für die Beschriftung transparenter Folien, insbesondere für den Bereich der Overhead-Projektion (OHP) eignen, andererseits darf die Tinte aber auch nicht zu rasch auf der Spitze des Schreib-, Mal-, Zeichen- oder Markiergeräts eintrocknen.

Aus der US-A-5282893 ist eine pigmentierte Tinte auf Alkoholbasis bekannt, die als Bindemittel ein Kondensationsprodukt aus Harnstoff und aliphatischen Aldehyden enthält. Diese Tinte ist wasserbeständig und zeichnet sich durch gute Konturenschärfe aus. Die US-A-5229653 beschreibt eine Tinte auf Alkoholbasis für einen nichtsaugenden Untergrund, die gut fixiert und sich nicht abreibt. Diese Tinte enthält als Bindemittel ein ethanollösliches Phenolharz.

Aus der EP-B2-0359805 sind Tinten bekannt, deren Schreibeigenschaften insbesondere deren Offenlagerfähigkeit, durch die Verwendung von auf bestimmte Weise kristallisierenden Feststoffen verbessert werden können. Der Feststoff muß neben einem Schmelzpunkt von ≥ 30 °C und einem Molekulargewicht von ≤ 1000 Dalton in den für die Tinten verwendeten Lösungsmitteln löslich sein.

Eine hohe Offenlagerfähigkeit ist zwar bei allen Tinten gewünscht, ein Nachteil bei den bekannten Methoden zur Erhöhung der Offenlagerfähigkeit ist es aber, daß die Haftfestigkeit dadurch in der Regel schlechter wird. Bei den sogenannten permanenten Tinten zur Beschriftung glatter Flächen ist dies ein entscheidender Nachteil. Über die Verwendung der in der EP-B2-0359805 zur Lösung der Aufgabenstellung (Verbesserung der Offenlagerfähigkeit) beschriebenen Feststoffe ("Antiblockadditive") zur Verbesserung der Haftfestigkeit, Filmbildungseigenschaften, Filmeigenschaften (wie z.B. Transparenz und Oberflächenglätte) ist dieser Patentschrift nichts zu entnehmen). Die Haftfestigkeit der dort beschriebenen Kombinationen ist vielmehr schlechter als ohne Zusatz der Feststoffe.

Aufgabenstellung der vorliegenden Erfindung ist es, Markierflüssigkeiten, und insbesondere permanente Tinten und Marker, auf Basis organischer Lösungsmittel bereitzustellen, die neben einer guten Offenlagerfähigkeit bei der Verwendung auf glatten Oberflächen auch eine gute Haftfestigkeit auf der Unterlage, gute Abriebfestigkeit und gute Filmbildungseigenschaften aufweisen und die sich insbesondere auch sehr gut für den OHP-Bereich eignen.

Insbesondere für die Verwendung auf transparenten Folien für den OHP-Bereich sind neben einer guten Haftung der Schrift auch gute Filmeigenschaften, wie insbesondere Transparenz und Oberflächenglätte, von entscheidender Bedeutung; durch solche Eigenschaften wird die Oberfläche des Schriftzuges glatter, weshalb sie beim Darüberwischen wie eine "Rutschbahn" wirkt, wodurch weniger Widerstand erzeugt wird, und damit eine gute permanente Haftung gewährleistet wird; daneben ist es für die Anwendung im OHP-Bereich auch von außerordentlicher und entscheidender Bedeutung, daß ein klarer oder zumindest ausreichend transparenter Film ausgebildet wird, mit dem bei der Projektion eine farbgetreue Wiedergabe erhalten werden kann, und der nicht die Tendenz zeigt, seine Transparenz zu verlieren, um dann in der Durchschicht schwarz zu erscheinen.

Diese Aufgabenstellung wird mit der vorliegenden Erfindung gelöst.

Gegenstand der Erfindung ist gemäß Patentanspruch 1 die Verwendung von einem oder mehreren Sterinen, insbesondere Cholesterin zur Verbesserung der Haftfestigkeit, Filmbildungs- und Filmeigenschaften von Tinten auf Basis organischer Lösungsmittel.

Zweckmäßige Ausgestaltungen davon sind Gegenstand der Ansprüche 2 bis 6.

Weiterer Gegenstand der vorliegenden Erfindung ist gemäß Anspruch 7 eine neue Tintenzusammensetzung auf der Basis organischer Lösungsmittel, die dadurch gekennzeichnet ist, daß sie eine Kombination von Sterinen mit Hexandiol-(1,6), Harnstoffderivaten und/oder Alkylamiden enthält.

Bevorzugte Ausführungsformen dieser Tinte sind Gegenstand der Ansprüche 8 bis 11.

Weiterer Gegenstand der vorliegenden Erfindung ist außerdem die Verwendung einer neuen Tintenzusammensetzung der vorstehend beschriebenen Art für transparente Folien, insbesondere für den OHP-Bereich.

Überraschenderweise wurde gefunden, daß durch einen Zusatz von Sterinen, insbesondere von Cholesterin zu einer Tinte auf Basis organischer Lösungsmittel nicht nur die Offenlagerfähigkeit verbessert werden kann, sondern insbesondere auch auf glatten Unterlagen, wie z.B. transparenten Folien, eine wesentlich verbesserte Haftfestigkeit, sehr gute Filmbildungseigenschaften und sehr gute Eigenschaften des Filmes selbst, wie z.B. ein klarer bis transparenter Film mit einer hervorragenden Oberflächenglätte, erhalten werden kann. Geeignet sind Verbindungen aus der Klasse der Sterine, insbesondere Cholesterin.

Neben dem alleinigen Zusatz von einem oder mehreren Sterinen, insbesondere Cholesterin eignen sich zur Erzielung der vorstehend genannten gewünschten Eigenschaften auch Kombinationen von Cholesterin mit Hexandiol-(1,6) und/oder Alkylamiden, und/oder auch mit Harnstoffderivaten.

Durch eine geeignete Kombination einer oder mehrerer dieser Substanzen in einem bestimmten Mengenverhältnis und/oder in Kombination mit bestimmten Lösungsmitteln und anderen Zusätzen, wie z.B. von Gleitmitteln aus der Lackindustrie und/oder filmbildenden handelsüblichen Harzen, lassen sich eine oder mehrere der vorstehend genannten erfindungsgemäß zu erzielenden gewünschten Eigenschaften im Hinblick auf eine Verbesserung der Haftfestigkeit, der Filmbildungseigenschaften, der Transparenz und/oder der Oberflächenglätte noch weiter optimieren. So ergibt z.B. eine Kombination mit handelsüblichen Gleitmitteln (Antiblocking agents, lubrication agents) aus der Lackindusterie, wie z.B. einem Siliconadditiv, im Hinblick auf die Filmbildungsund Filmeigenschaften bessere Ergebnisse als bei einer alleinigen Verwendung der Einzelkomponenten Sterin oder Siliconadditiv. Durch diese erfindungsgemäße Kombination lassen sich somit überraschenderweise überadditive (synergistische) Effekte im Hinblick auf die Haftfestigkeit, Filmbildungseigenschaften und Qualität des Filmes erzielen.

Unter den erfindungsgemäßen Tinten auf Basis organischer Lösungsmittel, bei denen es sich um permanente Tinten handelt, sind Tinten auf Basis eines organischen Lösungsmittels, das im wesentlichen frei ist von Wasser, zu verstehen.

Als Lösungsmittel eignen sich im wesentlichen alle für derartige Tinten auf Basis organischer Lösungsmittel bekannten und üblichen Lösungsmittel, sofern sie die erfindungsgemäß erzielbaren guten Eigenschaften nicht beeinträchtigen.

Vorzugsweise umfaßt das organische Lösungsmittel mindestens ein polares Lösungsmittel mit mindestens einer Hydroxylgruppe. Organische Lösungsmittel mit mindestens einer Hydroxylgruppe sind z.B. einwertige Alkohole mit vorzugsweise 1 bis 7 Kohlenstoffatomen, insbesondere mit 2 bis 4 Kohlenstoffatomen, und in erster Linie Ethanol, n-Propanol und Isopropanol; ein besonders zweckmäßiges organisches Lösungsmittel mit mindestens einer Hydroxylgruppe ist 1,2-Propylenglykolmonomethylether. Diese Lösungsmittel können einzeln oder als Mischung von zwei oder mehreren Lösungsmitteln verwendet werden, sowie gegebenenfalls auch in Kombination mit anderen polaren organischen Lösungsmitteln, wie z.B. Ketonen, soweit diese die erfindungsgemäß erzielbaren und erwünschten Eigenschaften nicht nachteilig beeinträchtigen.

Bei Verwendung von Lösungsmittelgemischen aus zwei oder mehreren organischen Lösungsmitteln können dafür zweckmäßige Lösungsmittel und Mengenverhältnisse, abhängig von der Art der verwendeten Lösungsmittel und der weiteren Tintenbestandteile, und abhängig von der gewünschten vorherrschenden Eigenschaft oder Eigenschaftskombination, ermittelt werden. Bei Mitverwendung von Ketonen treten diese in der Regel mengemäßig gegenüber den übrigen polaren organischen Lösungsmitteln zurück, und liegen in der Regel in einer Menge von nicht mehr als 10 Gew.-% vor.

Zur weiteren Verbesserung der Transparenz des Filmes eignet sich insbesondere auch ein Zusatz von Diacetonalkohol, in der Regel in einer Menge von bis zu 15 Gew.-%, und insbesondere von 0,5 bis 5 Gew.-%.

Bei den erfindungsgemäß verwendeten Harnstoffderivaten handelt es sich in der Regel um N- und/oder N'-substituierte Derivate, vorzugsweise mit Alkylsubstituenten mit 1 bis 7, und insbesondere 1 bis 3 Kohlenstoffatomen, sowie Ethylenharnstoff, und die entsprechenden Thioharnstoffderivate; daneben kommen auch durch Kondensationsreaktionen mit Aldehyden und/oder Ketonen erhaltene Derivate, z.B. Imidazol- oder Pyrimidin-Derivate, in Frage, sofern sie die gewünschten erfindungsgemäßen Eigenschaften nicht beeinträchtigen. Unter die erfindungsgemäß verwendbaren Harnstoffderivate fallen auch durch Veresterungs- und Alkylierungsreaktionen von Isoharnstoffen erhaltene Produkte.

Als erfindungsgemäß verwendete Alkylamide R-C(O)-NH₂ werden vorzugsweise solche verwendet, in denen der Alkylrest R 1 bis 6 Kohlenstoffatome umfaßt, und einen n-Alkylrest darstellt; in erster Linie wird als Alkylamid Acetamid eingesetzt.

Das Sterin wird vorzugsweise in einer Menge von 0,01 bis 10 Gew.-%, insbesondere von 1 bis 5 Gew.-%, und in erster Linie von 1,8 bis 3 Gew.-%, verwendet und ist bevorzugt Cholesterin.

Die Konzentration an Hexandiol-(1,6), Harnstoffderivaten und/oder Alkylamiden beträgt vorzugsweise 0,1 bis 25 Gew.-%, insbesondere 1 bis 10 Gew.-% und in erster Linie 2 bis 5 Gew.%, bezogen auf die gesamte Tintenzusammensetzung. Bei Verwendung von zwei oder mehreren der erfindungsgemäß verwendeten Zusätze Sterin, Hexandiol-(1,6), Harnstoffderivaten und Alkylamiden richtet sich das zweckmäßigste Mengenverhältnis der eingesetzten Verbindungen in erster Linie nach den übrigen Bestandteilen, z.B. dem gewählten Lösungsmittel oder der Lösungsmittelkombination und weiteren Zusätzen, und der beabsichtigten vorherrschenden Eigenschaft oder Eigenschaftskombination der filmbildenden Tinte.

Die erfindungsgemäßen Tinten auf Basis eines organischen Lösungsmittels können als Farbstoff einen für derartige Tinten üblichen und für den erfindungsgemäßen Zweck geeigneten, in einem organischen Lösungsmittel löslichen und/oder emulgierbaren Farbstoff und/oder Pigmentfarbstoff enthalten. Der Farbstoff kann bunt oder schwarz sein oder eine Mischung von Farbstoffen umfassen, die einen gewünschten Farbton erzielen.

Einige bevorzugt verwendete Farbstoffe sind z.B. C.I. Solvent Red 160, C.I. Basic Blue 7, C.I. Solvent Red 49, C.I. Basic Red 1, C.I. Solvent Orange 3 und C.I. Solvent Blue 70; je nach gewünschtem Farbton können ein oder mehrere dieser Farbstoffe, gegebenenfalls zusammen mit weiteren für derartige Tinten üblichen Farbstoffen oder Farbpigmenten, verwendet werden.

Besonders bei OHP-Anwendungen werden die Farbpigmente vorzugsweise in extrem feinvermahlenem Zustand verwendet, wobei die durchschnittliche Teilchengröße zweckmäßigerweise im Bereich von 0,01 bis 5 µm, und vorzugsweise zwischen 0,05 und 2 µm liegt. Zu beachten ist dabei, daß Pigmentpräparationen ausgewählt werden, die für eine alkoholische Basis geeignet sind.

Als Pigmentfarben können auch solche verwendet werden, bei denen die Pigmente im Handel erhältlichen Kunstharzdispersionen, z.B. solchen auf Basis von Polyvinylbutyral, zugesetzt werden.

Der Gehalt an dispergierbaren oder emulgierbaren Färbemitteln richtet sich nach deren Farbstärke und beträgt im allgemeinen 0,1 bis 15 Gew.-%, und insbesondere 1 bis 10 Gew.-%. Die Menge kann bei farbschwachen Pigmentfarben bis zu 30 Gew.-% betragen.

Durch Zusatz eines natürlichen und/oder synthetischen filmbildenden Harzes wird die Transparenz des Tintenfilms im allgemeinen verschlechtert; die Wasserbeständigkeit des Tintenfilms kann dadurch aber verbessert werden.

Natürliche filmbildende Harze, wie z.B. Schellack oder Gummi arabicum, sind aufgrund ihrer im allgemeinen schlechten Löslichkeit in Alkoholen weniger gut geeignet; besser geeignet sind z.B. aber Elemi oder Dammar. Am besten eignen sich jedoch Cyclohexanon-Kondensationsharze und deren Derivate.

Es wurde nun überraschenderweise auch festgestellt, daß durch den erfindungsgemäßen Zusatz von Hexandiol-(1,6), Harnstoffderivaten und/oder Alkylamiden, und insbesondere durch den Zusatz von Sterinen, vor allem Cholesterin, die filmbildenden Eigenschaften handelsüblicher filmbildender Harze deutlich verbessert werden können; es wird angenommen, daß diese Verbindungen, insbesondere Cholesterin, hier als Weichmacher fungieren und gleichzeitig die Qualität des Filmes, wie z.B. seine Transparenz und Oberflächenglätte, verbessern. Diese Wirkung läßt sich durch den weiteren Zusatz eines handelsüblichen Gleitmittels aus der Lackindustrie, wie z.B. eines Siliconadditivs, in Kombination mit Sterinen noch überadditiv optimieren, wobei die Kombination mit Cholesterin besonders bevorzugt ist.

Die erfindungsgemäße Tintenzusammensetzung kann auch weiter, insbesondere für permanente Tinten auf Basis eines organischen Lösungsmittels übliche Zusätze (Additive) enthalten, und vorzugsweise in den dafür üblichen Mengen.

Zur Regulierung der Oberflächenspannung, und damit auch der besseren Benetzbarkeit auf unpolaren Oberflächen, können der Zusammensetzung Tenside, z.B. solche auf Siliconbasis, oder fluorierter Kohlenwasserstoffe, zugesetzt werden. Hierdurch wird insbesondere ein Perlen beim Auftragen der Tinte auf einer glatten Unterlage verhindert.

Als Additive können z.B. genannt werden: Gleitmittel, insbesondere Siliconadditive, Tenside, insbesondere nicht-ionische Perfluortenside, Tenside mit Betainstruktur, sowie vorzugsweise nicht-ionische Verbindungen der Additionsprodukte von langkettigen Fettalkoholen und Ethylenoxid. Je nach Farbstofftyp können auch damit kompatible anionenaktive Emulgatoren, wie z.B. Natriumsalze von Aminocarbonsäuren oder Sulfobernsteinsäure Verwendung finden, sofern in organischen Lösungsmitteln löslich.

Zur weiteren Verbesserung der Offenlagerfähigkeit kann die erfindungsgemäße Tinte dafür übliche Zusätze enthalten, wie z.B. Glykole oder deren Mono- oder Diether, Tri- oder Tetraethylenglykol, Glycerin, Di- oder Triglycerin, Aminosäuren oder deren Derivate.

Durch eine geeignete Auswahl der Art und Menge der Bestandteile der erfindungsgemäßen Tintenzusammensetzungen können gezielt gewünschte Eigenschaften oder Eigenschaftenkombinationen der Tintenzusammensetzungen als vorherrschende Eigenschaften erzielt werden. So können z.B. mit einer Kombination von Cholesterin und Acetamid überraschend gute Ergebnisse im Hinblick auf die Haftung und eine gute Offenlagerfähigkeit erzielt werden, die gegenüber den Einzelkomponenten allein überadditive (synergistische) Ergebnisse darstellen.

Auch durch die geeignete Wahl des Lösungsmittels können bestimmte Eigenschaften in den Vordergrund gerückt werden. Z.B. können durch Auswahl eines geeigneten Lösungsmittels die Trocknungszeit der Schriftzüge, und damit die Filmbildungs- und Filmeigenschaften, beeinflußt werden; damit kann z.B. erreicht werden, daß das Sterin, z.B. Cholesterin, oder eine andere die Haftfestigkeit, Filmbildungs- und Filmeigenschaften beeinflussende Verbindung nicht amorph oder in Pulverform auskristallisiert, sondern bei genügend langsamer Trocknung gut verfilmt.

Als zu beschriftende Oberflächen (Substrate) können für die erfindungsgemäßen Anwendungen übliche Substrate, und insbesondere für den OHP-Bereich übliche transparente Folien, wie z.B. Folien aus Polypropylen, PVC, Trisacetat oder Polyester verwendet werden, wobei bei den verschiedenen Substanzen im wesentlichen gleich gute Eigenschaften im Rahmen der erfindungsgemäßen Aufgabenstellung erzielt werden können.

Als Schreibgeräte zum Aufbringen der erfindungsgemäßen Tinte auf das Substrat, z.B. für transparente Folien für den OHP-Bereich, können alle hierfür üblichen Schreibgeräte verwendet werden, wie z.B. Stifte mit gesinterter Faserspitze, oder einer Faserspitze aus laminaren Fasern oder einer extrudierten Spitze.

Die nachfolgenden Beispiele sollen die Erfindung nun näher erläutern, ohne sie darauf in irgendeiner Weise zu beschränken.

Wenn nicht anders angegeben, beziehen sich die in den Beispielen angegebenen Mengenangaben auf Gewichtsteile.

Die in den in den Beispielen verwendeten Handelsnamen bedeuten:

| | |
|---|---|
| Fluorad FC 430 | (fluorierter Alkylester) nichtionisches Perfluortensid |
| Kunstharz CA | Keton-Formaldehydharz |
| Rokrapal 9834 | Phenolmodifiziertes Kolophoniumharz |
| Rokramar 1051 | Maleinsäuremodifiziertes Kolophoniumharz |
| Tego Glide 410 | Siliconadditiv |
| Kunstharz SK | Keton-Formaldehydharz |
| Solvenon PM | Propylenglykolmonomethylether |
| Pyranton A | Diacetonalkohol |
| Neopenrot 366 | C.I. Solvent Red 160 |
| Basonylblau 636 | C.I. Basic Blue 7 |
| Neptun Rotbase 543 | C.I. Solvent Red 49 |
| Sepisol Fast Red SN | C.I. Basic Red 1 |
| Neptun Orangebase 206 | C.I. Solvent Orange 3 |
| Neopenblau 807 | C.I. Solvent Blue 70 |
| Spiritus | Ethanol (vergällt) |

Zur Feststellung der Haftfestigkeit, Filmbildungs- und Filmeigenschaften wurde das folgende Testverfahren verwendet: Die Tinte wurde in Stifte mit Faserspitze abgefüllt, und anschließend wurde mit diesen Stiften auf eine OHP-Folie aus PP eine Farbfläche aufgetragen. Nach einer Trocknungszeit von 5 Minuten wurde mit einem trockenen Vliestuch aus Papier mit gleichmäßigem Anpreßdruck darüber gerieben.

Die Tinten wurden mit den nachfolgend in den Beispielen 1 bis 9 angegebenen Rezepturen hergestellt.

### Beispiel 1 (Vergleich):

| | |
|---|---|
| 59,80 | Spiritus |
| 25,00 | n-Propanol |
| 5,00 | n-Butanol |
| 0,20 | Fluorad FC 430 |
| 10,00 | Neopenrot 366 |
| 100,00 | |

### Beispiel 2:

| | |
|---|---|
| 56,80 | Spiritus |
| 25,00 | n-Propanol |
| 5,00 | n-Butanol |
| 0,20 | Fluorad FC 430 |
| 3,00 | Cholesterin |
| 10,00 | Neopenrot 366 |
| 100,00 | |

Ein Vergleich des Beispiels 1 (nicht erfindungsgemäß) mit Beispiel 2 (erfindungsgemäß) ergab nach dem Testverfahren, daß sich die Tinte gemäß Beispiel 1 viel schneller (nach ca. 30 Sekunden) und leichter abreiben ließ, als die Tinte des erfindungsgemäßen Beispiels 2.

### Beispiel 3:

| | |
|---|---|
| 58,90 | Spiritus |
| 25,00 | n-Propanol |
| 0,20 | Fluorad FC 430 |
| 3,00 | Cholesterin |
| 2,00 | Basonylblau 636 |
| 3,50 | Neopenblau |
| 0,40 | Neptun-Rotbase 543 |
| 7,00 | Kunstharz CA |
| 100,00 | |

### Beispiel 4:

| | |
|---|---|
| 55,90 | Spiritus |
| 25,00 | n-Propanol |
| 0,20 | Fluorad FC 430 |
| 3,00 | Cholesterin |
| 2,00 | Basonylblau 636 |
| 3,50 | Neopenblau |
| 0,40 | Neptun-Rotbase 543 |
| 10,00 | Rokrapal 9834 |
| 100,00 | |

### Beispiel 5:

| | |
|---|---|
| 60,90 | Spiritus |
| 25,00 | n-Propanol |
| 0,20 | Fluorad FC 430 |
| 3,00 | Cholesterin |
| 2,00 | Basonylblau 636 |
| 3,50 | Neopenblau |
| 0,40 | Neptun-Rotbase 543 |
| 5,00 | Rokramar 1051 |
| 100,00 | |

Die erfindungsgemäßen Beispiele 3, 4 und 5 zeigen, daß die durch den Cholesterinzusatz erzielte Haftfestigkeit durch Kombination von Cholesterin mit einem üblichen Haftharz, wie z.B. Keton-Formaldehydharzen (Kunstharz CA), Acrylharzen (Joncryl 678, Carboset 525), Amidharzen (z.B. Versamid 737), Phthalatharzen (Rokrapal 9834), usw., noch weiter verbessert werden kann. Die nach dem Testverfahren durchgeführte Prüfung auf Haftfestigkeit zeigte, daß die Tinten der Beispiele 3, 4 und 5 eine bessere Haftfestigkeit als die des Beispiels 2 zeigten.

### Beispiel 6:

| | |
|---|---|
| 58,60 | Spiritus |
| 25,00 | n-Propanol |
| 0,20 | Fluorad FC 430 |
| 3,00 | Cholesterin |
| 2,00 | Basonylblau 636 |
| 3,50 | Neopenblau |
| 0,40 | Neptun-Rotbase 543 |
| 7,00 | Kunstharz CA |
| 0,30 | Tego Glide 410 |
| 100,00 | |

Die Rezeptur des Beispiels 6 ist identisch mit der Rezeptur des Beispiels 3, mit der Ausnahme, daß die Rezeptur des Beispiels 6 zusätzlich 0,30 Teile Tego Glide 410 (ein Siliconadditiv) enthielt (d.h. 0,30 Teile Spiritus des Beispiels 3 wurden in Beispiel 6 durch 0,30 Teile Tego Glide 410 ersetzt). Das Testverfahren ergab, daß durch den Zusatz des Gleitmittels Tego Glide 410 die Oberflächenglätte erhöht werden konnte, und damit die Abriebfestigkeit bzw. Haftfestigkeit des Filmes.

### Beispiel 7:

| | |
|---|---|
| 44,60 | Spiritus |
| 30,00 | Solvenon PM |
| 0,40 | Tego Glide 410 |
| 3,00 | Cholesterin |
| 7,00 | Kunstharz SK |
| 8,40 | Sepisol Fast Red SN |
| 3,60 | Neptun Orangebase 206 |
| 3,00 | Hexandiol-(1,6) |
| 100,00 | |

### Beispiel 8:

| | |
|---|---|
| 42,60 | Spiritus |
| 30,00 | Solvenon PM |
| 0,40 | Tego Glide 410 |
| 3,00 | Cholesterin |
| 7,00 | Kunstharz SK |
| 8,40 | Sepisol Fast Red SN |
| 3,60 | Neptun Orangebase 206 |
| 5,00 | Acetamid |
| 100,00 | |

### Beispiel 9:

| | |
|---|---|
| 42,60 | Spiritus |
| 30,00 | Solvenon PM |
| 0,40 | Tego Glide 410 |
| 3,00 | Cholesterin |
| 7,00 | Kunstharz SK |
| 8,40 | Sepisol Fast Red SN |
| 3,60 | Neptun Orangebase 206 |
| 3,00 | Acetamid |
| 2,00 | Hexandiol-(1,6) |
| 100,00 | |

Ein Vergleich der Tinten der Beispiele 7, 8 und 9 nach dem Testverfahren ergab ebenfalls wesentlich bessere Haftfestigkeit und Filmbildungseigenschaften als die nicht erfindungsgemäße Rezeptur des als Vergleich angegebenen Beispiels 1. Von den drei Beispielen 7, 8 und 9 erwies sich die Rezeptur des Beispiels 8, also unter Verwendung einer Kombination aus Cholesterin und Acetamid, im Hinblick auf die Haftfestigkeit und Filmbildungseigenschaften als optimale Rezeptur.

## Patentansprüche

1. Verwendung von einem oder mehreren Sterinen zur Verbesserung der Haftfestigkeit, Filmbildungs- und Filmeigenschaften von Tinten auf Basis organischer Lösungsmittel.

2. Verwendung nach Anspruch 1,
**dadurch gekennzeichnet, daß** als Sterin Cholesterin verwendet wird.

3. Verwendung nach Anspruch 1 oder 2 zur Verbesserung der Haftfestigkeit, Filmbildungseigenschaften, Transparenz und/oder Oberflächenglätte auf glatten Oberflächen.

4. Verwendung nach Anspruch 3 zur Verbesserung der Haftfestigkeit, Filmbildungseigenschaften, Transparenz und/oder Oberflächenglätte auf transparenten Folien für den OHP-Bereich.

5. Verwendung nach einem der Ansprüche 1 bis 4,
**dadurch gekennzeichnet daß** man eine Kombination von einem oder mehreren Sterinen, insbesondere Cholesterin mit Hexandiol-(1,6), Harnstoffderivaten und/oder Alkylamiden verwendet.

6. Verwendung nach einem der Ansprüche 1 bis 5,
**dadurch gekennzeichnet, daß** man das Sterin in einer Menge von 0,01 bis 10 Gew.-%, bezogen auf die gesamte Tintenzusammensetzung, verwendet.

7. Verwendung nach einem der Ansprüche 5 oder 6,
**dadurch gekennzeichnet, daß** die Konzentration an Hexandiol-(1,6), Harnstoffderivaten und/oder Alkylamid 0,1 bis 25 Gew.-%, bezogen auf die gesamte Tintenzusammensetzung, beträgt.

8. Tinte auf der Basis organischer Lösungsmittel,
**dadurch gekennzeichnet, daß** sie eine Kombination von einem oder mehreren Sterinen mit Hexandiol-(1,6), Harnstoffderivaten und/oder Alkylamiden enthält.

9. Tinte nach Anspruch 8,
**dadurch gekennzeichnet, daß** das Sterin Cholesterin ist.

10. Tinte nach einem der Ansprüche 8 oder 9,
**dadurch gekennzeichnet, daß** die Konzentration an Sterin 0,01 bis 10 Gew.-%, bezogen auf die gesamte Tintenzusammensetzung, beträgt.

11. Tinte nach einem der Ansprüche 8 bis 10,
**dadurch gekennzeichnet, daß** die Konzentration an Hexandiol-(1,6), Harnstoffderivaten und/oder Alkylamid 0,1 bis 25 Gew.-%, bezogen auf die gesamte Tintenzusammensetzung, beträgt.

12. Tinte nach einem der Ansprüche 8 bis 11,
**dadurch gekennzeichnet, daß** sie zusätzlich als Additiv ein Gleitmittel, oberflächenaktives Mittel und/oder Siliconadditiv enthält.

13. Verwendung einer Tinte nach einem der Ansprüche 8 bis 12 zur Beschriftung glatter, nichtsaugender Untergründe.

14. Verwendung nach Anspruch 13 zur Beschriftung von Folien für den OHP-Bereich.

## Claims

1. Use of one or more sterols to improve the adhesion, film-forming properties and film properties of inks based on organic solvents.

2. Use according to Claim 1, **characterized in that** cholesterol is used as a sterol.

3. Use according to Claim 1 or 2 to improve the adhesion, film-forming properties, transparency and/or surface smoothness on smooth surfaces.

4. Use according to Claim 3 to improve the adhesion, film-forming properties, transparency and/or surface smoothness on transparent film for the OHP sector.

5. Use according to one of Claims 1 to 4, **characterized in that** a combination of one or more sterols, especially cholesterol, with hexane-1,6-diol, urea derivatives and/or alkylamides is used.

6. Use according to one of Claims 1 to 5, **characterized in that** the sterol is used in an amount of from 0.01 to 10% by weight, based on the overall ink composition.

7. Use according to either of Claims 5 and 6, **characterized in that** the concentration of hexane-1,6-diol, urea derivatives and/or alkylamide is from 0.1 to 25% by weight, based on the overall ink composition.

8. Ink based on organic solvents, **characterized in that** it comprises a combination of one or more sterols with hexane-1,6-diol, urea derivatives and/or alkylamides.

9. Ink according to Claim 8, **characterized in that** the sterol is cholesterol.

10. Ink according to either of Claims 8 and 9, **characterized in that** the concentration of sterol is from 0.01 to 10% by weight, based on the overall ink composition.

11. Ink according to one of Claims 8 to 10, **characterized in that** the concentration of hexane-1,6-diol, urea derivatives and/or alkylamide is from 0.1 to 25% by weight, based on the overall ink composition.

12. Ink according to one of Claims 8 to 11, **characterized in that** it further comprises as additive a lubricant, surface-active agent and/or silicone additive.

13. Use of an ink according to one of Claims 8 to 12 to write on smooth, non-absorbent substrates.

14. Use according to Claim 13 to write on film for the OHP sector.

## Revendications

1. Utilisation d'un ou plusieurs stérols pour l'amélioration des propriétés d'adhérence, de formation et de qualité de films d'encre à base d'agents dissolvants organiques.

2. Utilisation selon la revendication 1, **caractérisée en ce que**, comme stérol, on utilise du cholestérol.

3. Utilisation selon la revendication 1 ou 2, en vue de l'amélioration de l'adhérence, de la formation, de la transparence et / ou du poli superficiel de surfaces lisses.

4. Utilisation selon la revendication 3 en vue de l'amélioration de l'adhérence, de la formation, de la transparence et /ou du poli superficiel de feuilles transparentes destinées au domaine de l'OHP (Over Head Projection, Affichage « tête haute »).

5. Utilisation selon l'une quelconque des revendications 1 à 4, **caractérisée en ce que** l'on utilise une combinaison d'un ou plusieurs stérols, en particulier du cholestérol avec de l'hexane-diol-1,6, des dérivés d'urée et / ou des alkyl-amides.

6. Utilisation selon l'une quelconque des revendications 1 à 5, **caractérisée en ce que** l'on utilise le stérol à raison de 0,01 à 10% en poids par rapport à la composition globale de l'encre.

7. Utilisation selon l'une quelconque des revendications 5 ou 6, **caractérisée en ce que** la concentration en hexane-diol-1,6, en dérivés d'urée et / ou en alkyl-amides est de 0,1 à 25% en poids par rapport à la composition globale de l'encre.

8. Encre à base d'un solvant organique **caractérisé en ce qu'**elle contient une combinaison d'un ou plusieurs stérols avec de l'hexane-diol-1,6, des dérivés d'urée et / ou des alkyl-amides.

9. Encre selon la revendication 8 **caractérisée en ce que** le stérol est le cholestérol.

10. Encre selon l'un quelconque des revendications 8 ou 9, **caractérisée en ce que** la concentration en stérol est de 0,01 à 10% en poids par rapport à la composition globale de l'encre.

11. Encre selon l'un quelconque des revendications 8 à 10, **caractérisée en ce que** la concentration en hexane-diol-1,6, en dérivés d'urée et / ou en alkyl-amides représente 0,1 à 25% en poids de la composition globale de l'encre.

12. Encre selon l'un quelconque des revendications 8 à 11, **caractérisée en ce qu'**elle contient au surplus comme additif un agent lissant, un agent tensioactif et / ou un additif siliconé.

13. Utilisation d'une encre selon l'un quelconque des revendications 8 à 12, pour une inscription sur un fond lisse non réfléchissant.

14. Utilisation selon la revendication 13, pour une inscription de feuillets pour le domaine OHP.
